# EUROPÄISCHE PATENTSCHRIFT

(11) **EP 1 069 649 B1**
(45) Veröffentlichungstag und Bekanntmachung des Hinweises auf die Patenterteilung: **14.09.2005**
(21) Anmeldenummer: 99113686.2
(22) Anmeldetag: 15.07.1999
(51) Int. Cl.: H01Q 13/08, H01Q 1/22, G01F 23/284

(54) **Wellenleiter für ein Mikrowellen-Füllstandsmessgerät**
Waveguide for a level measuring device operating with microwaves
Guide d'ondes d'un détecteur de contenu opérant à micro-ondes

(43) Veröffentlichungstag der Anmeldung: 17.01.2001
(73) Patentinhaber: Endress + Hauser GmbH + Co. KG, 79689 Maulburg (DE)
(72) Erfinder: Reimelt, Ralf, Dipl.-Ing., 79211 Freiburg i. Br. (DE); Neuhaus, Joachim, Dipl.-Phys., 79585 Steinen (DE); Baum, Gunther, 79585 Weitenau (DE)
(74) Vertreter: Andres, Angelika Maria

(56) Entgegenhaltungen:
- WO-A-98/25109
- US-A- 4 240 445
- US-A- 4 503 384

## Beschreibung

Die Erfindung betrifft einen Wellenleiter für ein Füllstandsmeßgerät zur Bestimmung des Füllstands eines Mediums in einem Behälter mittels geführter Mikrowellen-Pulssignale. Insbesondere betrifft die Erfindung einen solchen Wellenleiter eines Mikrowellen-Füllstandsmeßgerät, dessen Sondenteil in das zu messende Medium eintaucht und auf dem die Meßsignale zum Medium und die dort reflektierten Echosignale geführt werden.

Um den gesuchten Füllstand des Mediums zu bestimmen, werden Mikrowellen-Pulssignale in einer mit dem Wellenleiter verbundenen elektronischen Meßschaltung erzeugt und zum Wellenleiter, meist über eine Kabelverbindung, vorzugsweise ein Koaxial-Kabel, geleitet. Das Kabel wird mit einem Anschlußteil des Wellenleiters verbunden, so daß die Signale in den Wellenleiter eingekoppelt und entlang des Sondenteils zum Medium ausgesandt werden können. Eine den Füllstand markierende Ober- bzw. Grenzfläche des Mediums reflektiert die Pulssignale, die dann als sogenannte Echosignale auf dem Wellenleiter zum Füllstandsmeßgerät zurückgeführt werden. Mittels bekannter, dem Fachmann geläufiger Verfahren werden die Echosignale den ausgesandten Mikrowellensignalen überlagert, und aus dem derart gebildeten Gesamtsignal wird die Zeit, die zwischen dem Aussenden der Mikrowellensignale und dem Eintreffen der Echosignale verstreicht, ermittelt. Sie ist ein Maß für den Weg der Mikrowellensignale vom Füllstandsmeßgerät zur Oberfläche des Mediums und zurück und dient, bei bekannter Ausbreitungsgeschwindigkeit der Signale auf dem Sondenteil des Wellenleiters, zur Bestimmung des gesuchten Füllstands. Diese Art der Füllstandsmessung, die auf einer Laufzeitmessung mit geführten Mikrowellen-Pulssignalen beruht, ist auch unter dem Begriff "TDR (Time Domain Reflectometry)" bekannt.

Ein in das Medium eintauchender Sondenteil des Wellenleiters umfaßt mindestens einen sogenannten Leiter im eigentlichen Sinne. Nachfolgend wird der Begriff "Leiter" für einen Leiter aus einem beliebigen elektrisch leitenden Material, vorzugsweise aus Metall, verwendet, auf den die zur Messung dienenden Pulssignale eingekoppelt werden und/oder der zur Führung der Signale dient. Der Begriff "Leiter" in diesem Sinne kann sowohl Signalleiter, oder auch "heiße" Leiter genannt, und sogenannte "Schirmleiter" umfassen, wobei sich ein von den hochfrequenten Pulssignalen hervorgerufenes Feld zwischen den Leitern aufbaut. Wegen der hochfrequenten Signale geben die Bezeichnungen "Signalleiter" und "Schirmleiter" nur einen momentanen Zustand wieder. Sie sind nicht im üblichen elektrotechnischen Sinne gemeint, sondern werden hier zur besseren Unterscheidung der einzelnen Leiter voneinander verwendet. Diese Bezeichnungen lehnen sich beispielsweise an die Bezeichnung des Signal- und des Schirmleiters des Koaxial-Kabels an, mit dem die Meßsignale an den bzw. die Leiter des Wellenleiters an. Ein Ein-Leiter-Wellenleiter, wie er nachfolgend erklärt wird, umfaßt nur einen Signalleiter. Bei Bedarf und je nach Anwendungsfall kann ein Sondenteil eines Wellenleiters eine beliebige Anzahl von Signal- und Schirmleitern.

Wie gut der gesuchte Füllstand ermittelt werden kann, hängt von der Art der Einkopplung des Mikrowellensignals und von der Form des verwendeten Wellenleiters ab. Wesentliche Kriterien für eine konstruktive Auslegung eines Wellenleiters sind:
- Impedanz-Anpassung von der elektronischen Meßschaltung über die Einkopplung zum Sondenteil;
- Verhältnis zwischen von einer zur reflektierenden Grenzfläche gesandte Signalleistung und dort reflektierten Leistung der Echosignale; und
- Feldgradient der Mikrowellensignale in radialer Richtung um den Sondenteil herum.

Das erste Kriterium der obigen Auflistung bestimmt, ob und in welchem Ausmaß störende Reflexionen im Bereich der Einkopplung auftreten.

Das zweite Kriterium bestimmt eine Art globaler Empfindlichkeit des Wellenleiters und hängt wesentlich von den für den Wellenleiter verwendeten Materialien ab. Es gibt an, welche Energie der Mikrowellensignale an der Oberfläche des Mediums für die dort reflektierten Signale zur Verfügung steht und ob und wie gut das zur Füllstandsmessung dienenden Nutzecho auch bei Störsignalen identifiziert werden kann.

Das erste und zweite Kriterium bestimmen die sogenannte Blockdistanz, mit der diejenige Anfangslänge des Wellenleiters nach der Einkopplung bezeichnet wird, auf der ohne unverhältnismäßig großen Aufwand keine sinnvolle Detektion des gewünschten Nutzsignals erfolgen kann.

Das dritte Kriterium bestimmt, ob und wie stark das Füllstandmeßgerät auf Anlagerungen am bzw. Ansatz auf dem Sondenteil reagiert.

In seiner einfachsten (konstruktiven) Form weist ein solcher Wellenleiter einen Sondenteil mit einem einzelnen Signalleiter auf, der ein Stab oder ein Stahlseil sein kann. Ein Wellenleiter dieser Art ist auch unter der Bezeichnung "Sommerfeld-Leiter" bekannt.

Ist der Leiter mit einer dielektrischen Schicht überzogen, meist einer Kunststoffschicht, wird von einem "Goubau-Leiter" gesprochen. Bei der Anmelderin ist ein Füllstandsmeßgerät mit einem Sommerfeld-Leiter unter der Bezeichnung "Levelflex" erhältlich. Der große Vorteil des Ein-Leiter-Wellenleiters ist, daß er infolge seines einfachen mechanischen Aufbaus beliebig lang ausgeführt werden kann.

Trotz seines einfachen mechanischen Aufbaus ist der Ein-Leiter-Wellenleiter nicht für alle Anwendungsfälle geeignet. Das der Messung dienende elektrische und magnetische Feld bildet sich zwischen dem einzelnen Leiter des Sondenteils und beispielsweise einer Behälterwand aus, so daß das Feld um den Wellenleiter herum eine relativ große Ausdehnung zeigt. Einkopplungen (und Auskopplungen) von Signalen in den (bzw. aus dem) Ein-Leiter-Wellenleiter sind relativ schwierig zu realisieren, da ein erheblicher Teil der Signalenergie an der Einkopplung oder anderen Veränderungen der Geometrie des Wellenleiters reflektiert wird.

Andere Hindernisse in der Nähe des Ein-Leiter-Wellenleiters, z.B. Stutzen und Einbauten im Behälter, die vom Feld erfaßt werden, können ebenfalls die Identifizierung des eigentlichen Füllstands-Meßsignals erschweren oder unmöglich machen. Besonders gilt dies im Bereich eines Stutzens, der der Befestigung des Wellenleiters am Behälter dient. In einem solchen Bereich kann ohne unverhältnismäßig großen Aufwand kein Füllstand gemessen werden kann, sondern erst ab einer gewissen Entfernung davon, was mit dem erwähnten Begriff "Blockdistanz" bezeichnet wird.

Da beim Ein-Leiter-Wellenleiter ein erheblicher Teil der Signalenergie für den Aufbau des ausgedehnten Feldes verbraucht, also abgestrahlt wird, steht nur ein geringer Teil der Signalenergie für eine Füllstandsmessung zur Verfügung. Außerdem kann die abgestrahlte Energie im Befestigungsstutzen infolge mehrfacher Reflexionen zu unerwünschten Nachschwingeffekten führen. Derzeit gibt es noch keine zufriedenstellende Lösung, um bei einem Ein-Leiter-Wellenleiter störende Echosignale des Befestigungsstutzens aus dem eigentlichen Nutzsignal auszublenden.

Eine andere bekannte Form eines Wellenleiters weist einen Sondenteil auf mit einem Signal- und einem Schirmleiter in koaxialer Anordnung. Ein meist stabförmigen Signalleiter, ist vom meist rohrförmigen Schirmleiter konzentrisch umgeben, so daß das von den Mikrowellensignalen hervorgerufene Feld nur in dem, meist schmalen Ringraum zwischen dem Signalleiter und dem Schirmleiter ausbildet. Das dort eindringende Medium ruft das für die Bestimmung des Füllstands gewünschte Echosignal hervor.

Koaxial-Wellenleiter zeichnen sich durch eine effektive Signaleinkopplung aus. Da das vom Mikrowellen-Meßsignal erzeugte Feld auf den Bereich des Ringraumes zwischen den Leitern beschränkt ist, treten keine unerwünschten Abstrahleffekte auf. Es besteht keine Gefahr störender Wechselwirkungen mit Stutzen oder anderen Einbauten im Behälter. Die Blockdistanz ist gering und die Funktion des Koaxial-Wellenleiter nicht von seiner Einbaulage abhängig.

Bei heutigen Wellenleitern wird ein möglichst geringer Außendurchmesser angestrebt, so daß bei einem derartigen Koaxial-Wellenleiter der verbleibende Ringraum zwischen dem Signalleiter und Schirmleiter sehr klein ausfällt. Die Empfindlichkeit gegenüber Ansatz bzw. Anlagerungen des zu messenden Mediums im Ringraum sind recht groß und führen zu einem fehlerhaften Meßsignal. Auch zähflüssige Medien, selbst wenn sie den Ringraum nur kurzzeitig füllen bzw. am Signalleiter oder innen am Schirmleiter haften, sind für Koaxial-Wellenleiter nicht geeignet. Das zu messende Medium muß dünnflüssig sein.

Je schmaler der Ringraum des Koaxial-Wellenleiters ist, desto schwerer ist er von Ansatz bzw. Anlagerungen des zu messenden Mediums zu reinigen. Wegen der damit verbundenen Gefahr einer Bildung von Rückständen werden Koaxial-Leiter aus hygienischen Gründen in der Lebensmittelindustrie heute nicht verwendet.

Wie erwähnt, wird bei Koaxial-Wellenleiter das Meßsignal zwischen dem Signalleiter und dem ihn umgebenden Schirmleiter geführt, wobei das in den Ringraum zwischen den Leitern eindringende Medium das Nutzsignal hervorruft. Es ist daher möglich, in einem dem Anschlußteil des Wellenleiters zugewandten Bereich mit geeigneten Maßnahmen den Ringraum zu verschließen und gegenüber dem eindringenden Medium abzusperren. Beispielsweise kann der Ringraum im gewünschten Bereich durch geeigneten Kunststoff gefüllt werde, so daß im gefüllten Abschnitt die betreffende Länge des Sondenteils nicht für Messungen zur Verfügung steht. Diese erwünschte Verlegung des obersten Meßpunktes der Füllstandsmessung von der Befestigung des Wellenleiters am Behälter fort, wird auch "inaktive Länge" des Wellenleiters genannt.

In der WO-A 98/25109 ist ein solcher Koaxial-Wellenleiter für ein Füllstandsmeßgerät beschrieben und dargestellt, bei dem ein rohrförmiger mit Längsschlitzen versehener Schirmleiter einen stabförmigen Signalleiter umschließt.

Der rohrförmige Schirmleiter umgibt den Signalleiter im wesentlichen auf seiner gesamten Länge. Der Signalleiter wie auch der Schirmleiter sind von einem isolierenden Material umhüllt, das auch den Ringraum zwischen den beiden Leitern ausfüllt. Das elektromagnetische Feld, das für die Füllstandsmessung erforderlich ist, bildet sich nur aufgrund der Längsschlitze um den Wellenleiter aus, jedoch über die Länge des Wellenleiters nicht gleichmäßig und nicht in gewünschter Weise.

In der WO-A 98/05931 wird ein weiterer Wellenleiter für ein Füllstandsmeßgerät bekannt, bei dem als Sondenteil zwei oder mehr im wesentlichen in einer gemeinsamen Ebene liegende Leiter verwendet werden. Das zu messende Medium befindet sich um die Leiter herum und zwischen ihnen.

Der Sondenteil dieses Füllstandsmeßgeräts umfaßt "U-förmig" angeordnete Leiter, bei denen es im wesentlichen auf das von den Meßsignalen zwischen den parallelen und miteinander verbundenen Leitern aufgebaute Feld ankommt. Diese Konstruktion stellt eine Art Kompromiß zwischen Eindraht- und Koaxial-Wellenleiter dar und vereint in funktioneller Hinsicht deren Vorzüge. Bei größeren Längen des Sondenteils und bei bewegten Medien werden jedoch Abstandshalter zwischen den Leitern benötigt, um Störungen des Feldes oder Kurzschlüsse infolge von Verbiegungen oder Verdrillungen der Leiter zu vermeiden. Solche Abstandshalter oder Stützen zwischen den Leitern wirken jedoch als Reflektoren für die Meßsignale und führen zu unerwünschten Störechos. Außerdem kann sich zwischen den beschriebenen parallelen Leitern (und besonders auch auf den Abstandshaltern) Ansatz oder Ablagerungen bilden, was wiederum unerwünschte Störechos hervorruft.

Ein anderes Beispiel eines Wellenleiters mit mehreren, in einer gemeinsamen Ebene verlaufenden Leitern im Sondenteil ist in der US-A 4 807 471 beschrieben. Hier besteht der Sondenteil aus jeweils paarweise einander zugeordneten Leitern, wobei wenigstens die Leiter eines solchen Leiterpaares elektrisch kurzgeschlossen sind. Nachteilig bei diesem Wellenleiter ist, daß hier jeweils ein Signal- und ein Schirmleiter paarweise verwendet werden müssen, damit die Signale auf den Leitern gegenphasig sind. Wenigstens ein Signalleiter ist mit einem Schirmleiter über eine PIN-Diode elektrisch verbunden, wobei deren Funktion vom genauen Abstand der zueinander parallelen Leiter abhängt, der bei großer Länge des Wellenleiters durch Abstandshalter zwischen Signal- und Schirmleiter gewährleistet werden muß. Solche Abstandshalter wiederum bieten Anlagerungspunkte für unerwünschte Ablagerungen zwischen den Leiten, die dann das Meßsignal verfälschen.

Es ist daher die Aufgabe der Erfindung einen Wellenleiter für ein Füllstandsmeßgerät anzugeben, der sich durch einfachen Aufbau auszeichnet, der die Vorteile des Eindraht- und bekannter Mehrdraht-Wellenleiter vereint, indem er keine Wechselwirkung mit Behältereinbauten zeigt, dessen inaktive Länge auf einfache Weise einstellbar ist, und der auf einfache Weise von An- bzw. Ablagerungen zu reinigen ist.

Zur Lösung dieser Aufgabe besteht die Erfindung aus einem Wellenleiter für ein Füllstandsmeßgerät zur Bestimmung des Füllstands eines Mediums in einem Behälter mittels geführter Mikrowellen-Pulssignale, welcher Wellenleiter teilweise in das zu messende Medium eintaucht und umfaßt:
- einen Sondenteil mit
   -- wenigstens drei elektrisch leitenden Leitern,
      --- wovon mindesten einer ein Signal- und die anderen Schirmleiter sind,
   -- mindestens einem Trägerkörper,
      --- der die Leiter wenigstens teilweise umschließt,
- einen Anschlußteil
   -- mit einer Einkopplung zur Verbindung der Leiter mit einer die Mikrowellensignale erzeugenden elektronischen Meßschaltung und
- ein Befestigungsteil zur mechanischen Befestigung des Wellenleiters am oder auf dem Behälter.

In einer vorteilhaften Ausgestaltung des Wellenleiter nach der Erfindung ist ein Trägerkörper aus Kunststoff vorgesehen.

Nach der Erfindung bestehen bei einer weiteren vorteilhaften Ausgestaltung des Wellenleiter der Signalleiter und/oder die Schirmleiter aus elektrisch leitendem Kunststoff.

Bei einer anderen vorteilhaften Ausgestaltung der Erfindung werden Signalleiter und/oder Schirmleiter aus Metall verwendet.

Weitere vorteilhafte Ausgestaltungen beschäftigen sich mit verschiedenen Querschnittsformen des Sondenteils des Wellenleiters nach der Erfindung.

Die Erfindung beruht auf dem Grundgedanken, mehrfache Leiter, die in einer im wesentlichen parallelen Anordnung zueinander gegenüber Störeinflüssen unempfindlich sind, in einem Sondenteil des Wellenleiters derart zu ummanteln, daß An- bzw. Ablagerungen zwischen den Leitern verhindert werden und daß darüber hinaus der Sondenteil auf einfache Weise gereinigt werden kann. Aufgrund seines Aufbaus ist der Wellenleiters nach der Erfindung einfach und sicher zu montieren.

Ein weiterer Vorteil der Erfindung besteht darin, daß durch die besondere Gestaltung der Einkopplung (bzw. Auskopplung) der Meßsignale und der Möglichkeit zur besonderen Impedanzanpassung die inaktive Länge des Wellenleiters in gewünschter Weise und mit einfachen Mitteln eingestellt werden kann. Der Wellenleiter kann daher auch so kurz ausgeführt werden, daß er sich für Messungen in solch flachen Behältern eignet, in denen bisher mit Mikrowellen- oder Radar-Füllstandsmeßgeräten nicht gemessen werden kann.

Ein anderer Vorteil der Erfindung ist, daß sie vielfältige Gestaltungsmöglichkeiten des Sondenteils in Verbindung mit verschiedenen Anordnungen der Leiter bietet. Die eingangs erwähnten Kriterien, die z.B. die globale Empfindlichkeit des Wellenleiters bestimmen, können mit der Erfindung für den jeweiligen Anwendungsfall in gewünschter Weise optimiert werden. So läßt sich z.B. durch geeignete Wahl der Anzahl der Leiter und des Materials des Trägerkörpers des Sondenteils das Verhältnis der Mikrowellenenergie im Innern und außerhalb es Sondenteils festlegen, wodurch z.B. die Störanfälligkeit des Wellenleiters gegenüber Ansatz in Abhängigkeit vom Medium eingestellt werden kann. Der Wellenleiter kann außerdem eine von der Geometrie des Behälters oder vom zu messenden Medium bestimmte Form annehmen. Sein Sondenteil, der in das zu messende Medium eintaucht, kann an sich eine beliebige Länge annehmen.

Die Erfindung wird nun anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet.
Fig. 1 zeigt schematisch einen Längsschnitt eines ersten Ausführungsbeispiels eines Wellenleiters nach der Erfindung;
Fig. 2 zeigt einen Querschnitt eines Sondenteils des Wellenleiters nach Fig. 1
Fig. 3 zeigt perspektivisch und schematisch ein zweites Ausführungsbeispiel des Wellenleiters nach der Erfindung;
Fig. 4 zeigt schematisch den Wellenleiter nach Fig. 3 in Seitenansicht mit eingezeichneten Innenkanten;
Fig. 5 zeigt schematisch einen Querschnitt eines Sondenteils eines dritten Ausführungsbeispiels des Wellenleiters nach der Erfindung;
Fig. 6 zeigt schematisch einen Längsschnitt eines vierten Ausführungsbeispiels des Wellenleiters nach der Erfindung;
Fig. 7 zeigt schematisch einen Querschnitt des Sondenteils des Wellenleiters nach Fig. 6;
Fig. 8 zeigt schematisch einen weiteren Längsschnitt des Wellenleiters nach Fig. 6;
Fig. 9 zeigt schematisch einen Querschnitt eines Sondenteils eines fünften Ausführungsbeispiels des Wellenleiters nach der Erfindung; und
Fig. 10 zeigt schematisch einen Querschnitt eines Sondenteils eines sechsten Ausführungsbeispiels des Wellenleiters nach der Erfindung.

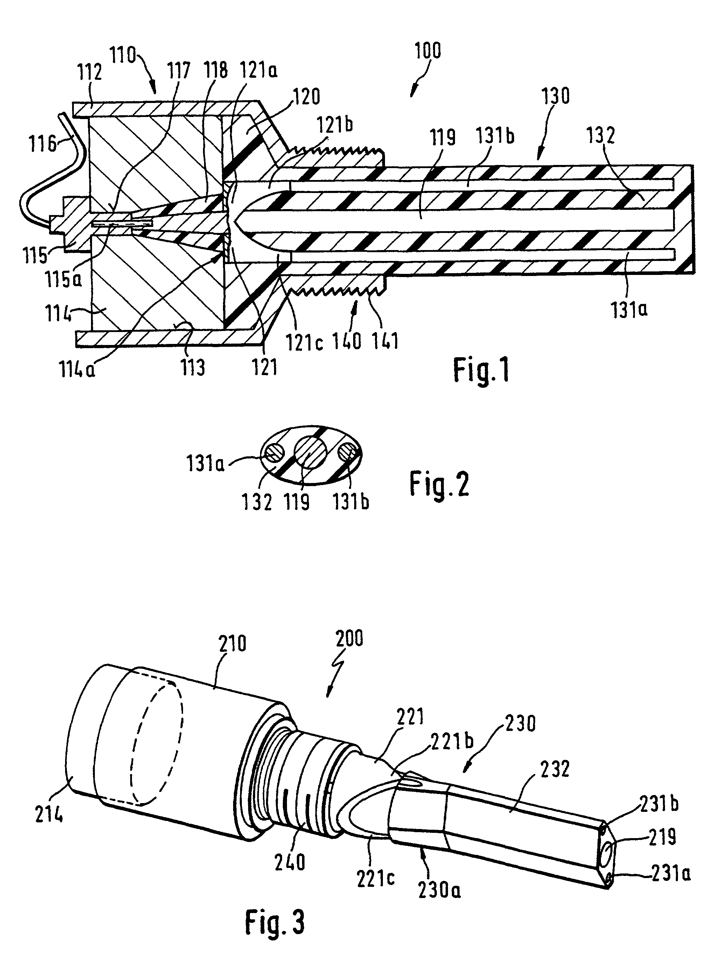

Ein in Fig. 1 dargestellter Wellenleiter 100 nach der Erfindung weist einen Anschlußteil 110, einen Sondenteil 130 und einen Befestigungsteil 140 zur Befestigung des Wellenleiters 100 an oder in einem hier nicht dargestellten Behälter auf, wo der Füllstand des darin befindlichen Mediums ermittelt werden soll.

Der Anschlußteil 110 umfaßt ein, wie in Fig. 1 dargestellt, äußeres und im wesentlichen dosenförmiges Gehäuse 112, dessen kopfseitige Öffnung 113 von einem Verschlußteil 114 verschlossen ist. Am Verschlußteil 114 ist ein Stecker 115 befestigt, beispielsweise ein handelsüblicher Stecker, vorzugsweise ein BNC- Stecker, der in eine entsprechende Bohrung oder Anschlußöffnung 117 im Verschlußteil 114 eingreift. Es ist auch denkbar, einen solchen Stecker 115 zu verwenden, der mit einem Gewinde versehen ist, so daß er dann in ein entsprechendes Innengewinde in der Öffnung 117 im Verschlußteil 114 eingeschraubt werden kann. Selbstverständlich sind auch andere Arten der Befestigung des Steckers 115 im Verschlußteil möglich, sofern eine mechanisch sichere und möglichst auch dichte Verbindung des Stecker 115 zum Verschlußteil 114 gewährleistet ist.

Das Verschlußteil 114 ist vorzugsweise im äußeren Gehäuse 112 befestigt, wobei es beispielsweise mit einem Außengewinde versehen ist, das in ein entsprechendes Innengewinde des Gehäuses 112 eingreift. Andererseits ist auch jede andere Verbindung vorstellbar, sofern sie den Verschlußteil 114 sicher im Gehäuse 112 fixiert und, falls erforderlich, abdichtet.

Das Gehäuse 112, der Verschlußteil 114 und der Stecker 115 sind vorzugsweise aus Metall. Sie können aber auch aus anderen geeigneten Materialien hergestellt sein, z.B. Kunststoff, wobei allerdings zu berücksichtigen ist, daß das Verschlußteil 114 die über den Stecker 115 bereitgestellten hochfrequenten Meßsignale an im Sondenteil 130 angeordnete Leiter 131a und b weiterführen müssen. Die Fähigkeit zur Führung bzw. Leitung der HF-Signale müssen dann auch ein Verschlußteil 114 aus Kunststoff bzw. ein Stecker 115 aus Kunststoff haben.

Ein rückseitig am Stecker 115 angeordnetes, hier schematisch dargestelltes Kabel 116, beispielsweise ein Koaxial-Kabel, verbindet den Wellenleiter 100 mit einer hier nicht dargestellten, elektronischen Meßschaltung. Dort erzeugte Meßsignale werden über einen "heißen Draht" des Koaxial-Kabels 116 auf einen Kontaktstift 115a gegeben, der in direktem Kontakt mit einen vorzugsweise stabförmigen Signalleiter 119 im Sondenteil 130 geleitet. Der Kontaktstift 115a ist im Innern des Verschlußteils 114 von einem Konus 118 umgeben und dadurch vom Verschlußteil 114, daß mit einem Schirmleiter des Koaxial Kabels 116 in Verbindung steht isoliert. Der Konus 118 ist vorzugsweise aus Kunststoff, er kann aber auch aus anderen geeignetem Material bestehen.

Im Innern des Gehäuses 112, genauer in einem dem Stecker 115 gegenüberliegenden Teil der Öffnung 113 und in Richtung auf den Sondenteil 140 gesehen, schließt sich an den Verschlußteils 114 ein Kopfteil 120 eines Trägerkörpers 132 an. Dieses Kopfteil 120 ist in einem entsprechend geformten Bereich der Öffnung 113 des Gehäuses 112 durch den Verschlußteil 114 gehaltert. Der Kopfteil 120 ist im eigentlichen Sinne Bestandteil des Trägerkörpers 132, in dem der Signalleiter 119 und die Schirmleiter 131a und 131b eingebettet sind. Der Trägerkörper 132 besteht aus einem dielektrischen Material, beispielsweise ein PEEK, PPS oder PTFE -Kunststoff. Weitere geeignete Materialien sind z. B. ECTFE, ETFE, FEP, PCTFE, PFA, PVDF, PVF, PVC, wobei in der Lebensmittelindustrie Trägerkörper aus PTFE-, PCTFE- und PFA-Kunststoff bevorzugt werden.

Der Signalleiter 119 erstreckt sich von einem dem Verschlußteil 114 gegenüberliegenden Bereich des Sondenteils 130 durch den Konus 118 hindurch und über den Kopfteil 120 hinaus, wie erwähnt, bis zum Kontaktstift 115a des Steckers 115. Im Sondenteil 130 ist der Signalleiter 119 auf seiner gesamten Länge vom Material des Trägerkörpers 132 umgeben und dadurch von den, im Ausführungsbeispiel der Fig. 1 zwei parallel zu ihm im Trägerkörper angeordneten Schirmleitern 131a und 131b isoliert.

Die Begriffe "Signalleiter" und "Schirmleiter" werden hier, wie eingangs bereits erwähnt, nicht im üblichen elektrotechnischen Sinne verwendet, sondern sie dienen hier zur besseren Unterscheidung der einzelnen Leiter voneinander. Diese Bezeichnungen lehnen sich an die Bezeichnung des Signal- und des Schirmleiters des Koaxial-Kabels 116 an, mit dem die Meßsignale an den Wellenleiters herangeführt werden. In erfinderischer Weise wird diese Koaxial-Anordnung für die Leiter 119 und 131a und 131b beibehalten, so daß der Signalleiter 119 zum Anschluß an den Kontaktstift 115a zwischen den Schirmleitern 131a und 131b hindurchgeführt werden kann. Zu diesem Zweck sind im Kopfteil 120 des Sondenteils 130 die Schirmleiter 131a und 131b mit einem kronenförmigen Koppelteil 121 verbunden, über das sie wiederum mit dem Verschlußteil 114, genauer gesagt mit dessen innerer Stirnseite 114a, und darüber wieder mit dem Schirmleiter des Koaxial-Kabels 16 in Kontakt stehen.

Bei dem in Fig. 1 dargestellten Ausführungsbeispiel des Wellenleiters 100 weist das Koppelteil 121 einen ringförmigen, durch einen zylindrischen Teil 121a veranschaulichten Basisteil auf, der in zwei spitzenartigen Fortsätzen 121b und 121c ausläuft. Zusammen bilden der zylindrische Teil 121a und die Fortsätze 121b und 121c die erwähnte Form einer Krone, an deren Spitzen die Schirmleiter 131a und 131b befestigt sind. Dieser besondere und bevorzugte Aufbau des Koppelteils 121 läßt sich sehr einfach aus einem rohrförmigen Bauteil herstellen, bei dem hinter dem gewünschten Basisteil jeweils schräge Schnitte von außen nach innen zu einer Längsachse des Rohrstückes hin ausgeführt wird. Besonders für den Fall, wo mehr als zwei Schirmleiter für den Wellenleiter vorgesehen sind, lassen sich so auf einfache Weise kronenförmige Koppelteile 121 mit der gewünschten Anzahl von Spitzen herstellen.

Des weiteren läßt sich durch eine gegenüber der Abbildung der Fig. 1 veränderte Form des Koppelteils 121, insbesondere von dessen Basisteil 121a, die oben beschriebene inaktive Länge des Wellenleiters 100 kontrollieren. Zum Beispiel kann der Basisteil 121a des Koppelteils 121 in Richtung auf den Sondenteil 130 bis über den Befestigungsteil 140 hinaus verlängert werden, so daß der Signalleiter 119 bis dort vom Basisteil 121a koaxial umschlossen wird. Dieser umschlossene Bereich des Signalleiters steht für eine Messung nicht zur Verfügung und bestimmt die inaktive Länge. Andererseits erlaubt die Erfindung aber auch eine sehr kurze inaktive Länge des Wellenleiters zu verwirklichen, indem beispielsweise der Koppelteil 121 als dünner Ring ausgeführt wird, der, quer zu Längsachse der Schirmleiter 131a und 131b angeordnet, diese miteinander verbindet.

Der Signalleiter 119, die Schirmleiter 131a und 131b und der Koppelteil 121 sind aus elektrisch leitendem Material, vorzugsweise aus Metall. Aber es sind auch andere elektrisch leitenden Materialien vorstellbar.

Der in Fig. 1 dargestellte Sondenteil 130 ist ein besonderes Ausführungsbeispiel des Wellenleiters 100 nach der Erfindung. Er kann je nach Anwendungsfall und Behälter z.B. länger oder von anderer geometrischer Form sein. Auch die Befestigung des Wellenleiters 100 kann dabei eine Rolle spielen. Zur Vereinfachung und da sie an sich für die Erfindung nicht maßgeblich ist und zur Unterstreichung der vielseitigen Einsetzbarkeit des Wellenleiters 100 ist in Fig. 1 ein "einfacher" Befestigungsteil 140 mit einem darauf angebrachten Außengewinde 141 dargestellt, das in ein entsprechendes Innengewinde eines geeigneten Stutzens des Behälters eingreift. Es sind darüber hinaus auch andere Befestigungsarten des Wellenleiters realisierbar, wie z.B. Flansche oder Steckverbindungen, sofern sie eine mechanisch verläßliche und gegebenenfalls dichte Befestigung des Wellenleiters 100 am bzw. im Behälter gewährleisten.

Wie Fig. 2 zeigt, hat der Trägerkörper 132 des Wellenleiters 100 nach Fig. 1 eine im wesentlichen ovale Querschnittsform. Deutlich zu sehen sind die Schirmleiter 131a, 131b und der mittig angeordnete Signalleiter 119. Der Vorteil dieser ovalen Querschnittsform ist, daß sie bei hinreichender mechanischer Stabilität mit relativ wenig Material für den Trägerkörper 132 und damit geringen Leistungsverlusten entlang des Sondenteils 130 auskommt. Der so erhaltene Sondenteil 132 ist leicht zu reinigen und eignet sich bei entsprechendem Kunststoff besonders für eine Verwendung in der Lebensmittelindustrie. Der Sondenteil 132 mit solch einem ovalen Querschnitt kann ohne großen zusätzlichen Fertigungsaufwand in beliebiger Länge hergestellt werden.

In Fig. 3 ist ein zweites bevorzugtes Ausführungsbeispiel des Wellenleiters nach der Erfindung dargestellt. Dieser Wellenleiter 200 ist ähnlich dem Wellenleiter 100 nach Fig. 1 aus einem Anschlußteil 210, einem Befestigungsteil 240 und einem Sondenteil 230 aufgebaut, in dem zwei Schirmleiter 231a und 231b sowie ein Signalleiter 219 vorgesehen sind.

An ein in das Gehäuse des Anschlußteils 210 einschraubbarer Verschlußteil 214 kann, wie beim Ausführungsbeispiel der Fig. 1, ein Koaxial-Kabel angeschlossen werden, über das die Meßsignale geführt werden.

Der Sondenteil 230 weist im Unterschied zum Wellenleiter 100 nach den Fig. 1 und 2 einen Trägerkörper 232 mit rautenförmigen Querschnitt auf. Deutlich zu erkennen ist auch hier ein, wie in Fig. 1 dargestelltes, kronenförmiges Koppelteil 221 mit seinen Fortsätzen 221a und 221b, die mit den Schirmleitern 231a und 231b verbunden sind. Entsprechend Fig. 1 wird auch der Koppelteil 221 mit dem Verschlußteil 214 verbunden, so daß die am Koppelteil 221 befestigten Schirmleiter 231a und 231b mit einem Schirmleiter des Koaxial-Kabels in Kontakt stehen. Die Verbindung des Signalleiters 219 mit einem Signalleiter des Koaxial-Kabels ist vorzugsweise ähnlich der Darstellung in Fig. 1 ausgeführt. Ein Befestigungsteil 240 entspricht in Form und Funktion dem Befestigungsteil 140 der Fig. 1.

Zum Koppelteil 221 hin verdickt sich der Trägerkörper 232, was in Fig. 3 durch "230a" veranschaulicht wird und überdeckt die Spitzen der Fortsätze 221b und 221c des Koppelteils 221. Dies gewährleistet einen sicheren mechanischen Schutz für die daran angebrachten Schirmleiter 231a und 231b. Falls gewünscht, kann der Koppelteil 221 mit einem dünnen, hier nicht dargestellten Kunststoff-Schlauch umhüllt werden, um ihn nicht direkt dem zu messenden Medium auszusetzen.

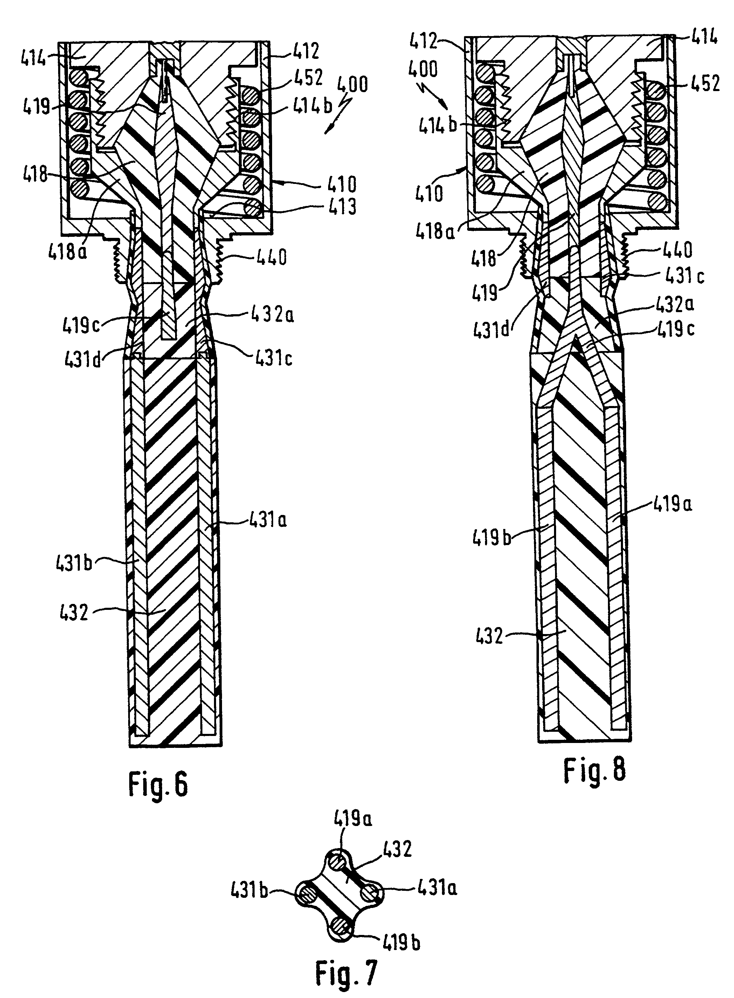

Fig. 4 stellt den Wellenleiter 200 in einer Seitenansicht dar, wobei Innenkanten eingezeichnet sind. Im Anschlußteil 210 ist der Verschlußteil 214 mit einer Öffnung bzw. Buchse für einen hier angedeuteten Stecker 215, beispielsweise ein BNC-Stecker, zu sehen, dessen Kontakstift 215a in einer entsprechende Buchse des Signalleiters 219 steckt. Der Signalleiter 219 wie auch der Trägerkörper 232 sind hier aus Fertigungs- und Montagegründen aus mehreren Teilen zusammengesetzt. Fig. 4 zeigt auch einen den Signalleiter 219 im Bereich des Anschlußteils 210 von den Schirmleitern 231a (und 231b, siehe Fig. 3) isolierenden Konus 218 sowie den Koppelteil 221 mit seinen Fortsätzen 221b und 221c. Allerdings ist Darstellungsgründen davon nur der Fortsatz 221c abgebildet, an dem der Schirmleiter 231a angebracht ist.

In Fig. 5 ist ein Sondenteil 330 eines dritten bevorzugten Ausführungsbeispiels des Wellenleiters nach der Erfindung im Querschnitt dargestellt. In einen Trägerkörper 332, der vorzugsweise aus einem der erwähnten Kunststoffe besteht, sind ein Signalleiter 319 sowie zwei Schirmleiter 331a und 331b eingebettet, die gegenüber den oben erwähnten Leitern einen rechteckigen Querschnitt haben. Falls ein Sondenteil 330 mit nur geringen Abmessungen gewünscht wird, können bei diesem Ausführungsbeispiel Blechstreifen als Leiter verwendet werden, so daß der Sondenteil 330 nach Art eines Flachbandkabels kostengünstig herstellbar ist. Flache Sondenteile 330 nach Fig. 5 eignen sich für eine Montage in der Nähe von geraden Behälterwänden, wo im Innenraum des Behälters wegen anderer Einbauten nur wenig Platz zur Verfügung steht.

Die übrigen Teile des Wellenleiters, wie z.B. das Anschlußteil und das Koppelteil entsprechen in Form und Funktion den Ausführungsbeispielen nach den Figuren 1, 2, 3 oder 4.

Ein viertes bevorzugtes Ausführungsbeispiel der Erfindung ist in den Fig. 6, 7 und 8 dargestellt. Im Unterschied zu den oben erwähnten Ausführungsformen mit drei Leitern im Sondenteil, handelt es sich hier um einen Wellenleiter 400 mit einem Sondenteil 430, in dessen Trägerkörper 432 zwei Signalleiter 419a und 419b sowie zwei Schirmleiter 431a und 431b eingebettet sind. Außerdem ist ein Anschlußteil 410 des Wellenleiters 400 anders gestaltet als die der oben erwähnten Wellenleiter nach den Fig. 1 und 4.

Der wesentliche Unterschied besteht in der Grundkonzeption des Wellenleiters 400, der für eine besondere Abdichtung des Trägerkörpers 432 in einem Befestigungsteil 440 vorgesehen ist.

Der Trägerkörper 432 mit dem in Fig. 7 dargestellten sternförmigen Querschnitt in einem dem Anschlußteil 410 abgewandten Bereich wird im Befestigungsteil 440 in einem separaten Trägerkörperteil 432a fortgesetzt, an den sich im Anschlußteil 410 ein Doppelkonus 418, vorzugsweise aus Kunststoff, anschließt. Der Doppelkonus 418 umgibt ein mit den Signalleitern 419a und 419b verbundenes, Y-förmiges Brückenteil 419c, vorzugsweise aus Metall, und isoliert das letztere von Schirmleiterverlängerungen 431c und 431d, die ebenfalls vorzugsweise aus Metall gefertigt sind.

Wie in Fig. 6 dargestellt, ist in einem äußeren Gehäuse 412 des Anschlußteils 410 eine Konushalterung 418a, vorzugsweise aus Metall, für den Doppelkonus 418 vorgesehen, die mit den Schirmleiterverlängerungen 431c und 431d elektrisch leitend verbunden ist. Ein Verschlußteil 414, das mit einer, wie oben bereits beschriebenen Steckerbuchse für einen mit einem Koaxial-Kabel verbundenen Stecker versehen ist, ist mittels einer Gewindeverbindung 414b fest mit der Konushalterung 418a verbunden. Das Verschlußteil 414 ist aber im Unterschied zu den vorher vorgestellten Ausführungsformen der Erfindung hier nicht starr mit dem äußeren Gehäuse 412 verbunden sondern, in gewissen Grenzen, darin verschieblich.

Die Schirmleiterverlängerungen 431c und 431d sind im Bereich des Befestigungsteils 440 von einer Kunststoff-Ummantelung 450 umhüllt, die sie gegenüber dem zu messenden Medium abdeckt. Die Ummantelung 450 ist beispielsweise für lebensmitteltechnische Anwendungen aus kaltfließendem Kunststoff, vorzugsweise Teflon- oder ähnlichem Material gefertigt und setzt durch das Innere des Befestigungsteils 440 bis in das Gehäuse 412 des Anschlußteils 410 fort. Für den Fall, daß das Material der Ummantelung 450 zu fließen beginnt und die Einspannung des separaten Trägerkörperteils 432a und der Schirmleiterverlängerungen 431c und 431d im Befestigungsteil 440 nachläßt, besteht die Gefahr einer geringen Undichtigkeit zum Innern des Gehäuses 412 hin. Die Erfindung hat jedoch für diesen Fall Sorge getragen und im Innern des Gehäuses 412 eine, beim Einbau des Verschlußteils 414 leicht vorgespannte Schraubenfeder 452 vorgesehen, die dann auf die Konushalterung 418a einwirkt und sie mitsamt den daran befestigten Schirmleiterverlängerungen 431c und 431d in den Befestigungsteil 440 hineinzieht. Eine leichte, den Fig. 6 und 8 entnehmbare Konizität der Schirmleiterverlängerungen 431c und 431d begrenzt ihren Hub und verhindert, auch ganz allgemein, daß der Verschlußteil 414 aus dem Gehäuse 412 heraustritt.

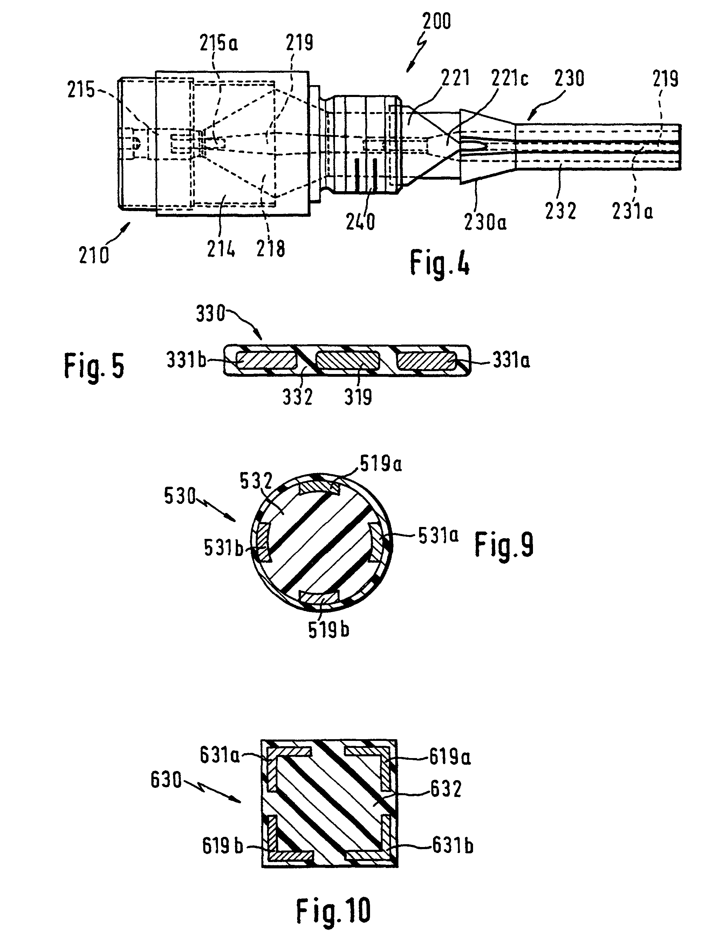

Der Vollständigkeit halber sind in den Fig. 9 und 10 weitere Ausführungsformen verschiedener Querschnitte von Trägerkörpern abgebildet, die die vielseitige Verwendbarkeit der Erfindung illustrieren.

In Fig. 9 ist ein im wesentlichen runder Sondenteil 530 eines fünften bevorzugten Ausführungsbeispiels des Wellenleiters mit vier Leitern im Querschnitt dargestellt. In einem Trägerkörper 532, der vorzugsweise aus einem der oben erwähnten Kunststoffe besteht, sind zwei Signalleiter 519a und 519b sowie zwei Schirmleiter 531a und 531b eingebettet, die randseitig in entsprechende Ausnehmungen des Trägerkörpers 532 eingelassen sind. Sie können nach außen hin, also gegenüber dem Medium durch entsprechende Kunststoffumhüllung isoliert werden.

In einer besonders einfachen Ausführungsform können die Leiter 519a, 519b, 531a und 531b in Form von Blechstreifen außen auf einen zylindrischen Trägerkörper 532 aufgebracht werden und dort durch eine zusätzliche Umhüllung mittels eines Kunststoffschlauches fixiert werden.

Die übrigen Teile des Wellenleiters, wie z.B. das Anschlußteil und das y-förmige Brückenteil entsprechen in Form und Funktion den Ausführungsbeispielen nach den Figuren 6 -8.

Fig. 10 zeigt einen im wesentlichen quadratischen Sondenteil 630 eines sechsten bevorzugten Ausführungsbeispiels des Wellenleiters mit vier Leitern im Querschnitt. In einem Trägerkörper 6532, der vorzugsweise aus einem der oben erwähnten Kunststoffe besteht, sind zwei Signalleiter 619a und 619b sowie zwei Schirmleiter 631a und 631b eingebettet, die randseitig, hier an den Ecken, in entsprechende Ausnehmungen des Trägerkörpers 632 eingelassen sind. Sie können nach außen hin, also gegenüber dem Medium durch entsprechende Kunststoffumhüllung isoliert werden.

Auch hier können die Leiter 519a, 519b, 531a und 531b beispielsweise in Form von geknickten oder sonstwie vorgeformten Blechstreifen außen auf die Kanten der stabförmigen Trägerkörper 532 aufgebracht werden und dort durch eine zusätzliche Umhüllung mittels eines Kunststoffschlauches fixiert werden.

Die übrigen Teile des Wellenleiters, wie z.B. das Anschlußteil und das y-förmige Brückenteil entsprechen in Form und Funktion den Ausführungsbeispielen nach den Figuren 6 -8.

Der besondere Vorteil des in Fig. 10 dargestellten Trägerkörpers ist, daß die Leiter relativ groß und die randseitigen Abstände zwischen ihnen relativ gering ausgeführt werden können. Mit dieser Maßnahme läßt sich auf einfache Weise die globale Empfindlichkeit des Wellenleiters optimieren.

### Bezugszeichenliste

- 100: Wellenleiter
- 110: Anschlußteil
- 112: äußeres Gehäuse
- 113: kopfseitige Öffnung von 112
- 114: Verschlußteil in 113
- 114a: innere Stirnseite von 114 im Bereich von 118
- 115: Stecker für 116
- 115a: Kontaktstift von 115
- 116: Koaxial-Kabel
- 117: Bohrung in 114 zur Aufnahme von 115
- 118: Konus
- 119: Signalleiter
- 120: Kopfteil von (132)
- 121: (kronenförmiger) Koppelteil
- 121a: Basisteil von (121)
- 121b: Fortsatz von (121)
- 121c: Fortsatz von (121)
- 130: Sondenteil
- 131a: Schirmleiter
- 131b: Schirmleiter
- 132: Trägerkörper
- 140: Befestigungsteil
- 141: Außengewinde

- 200: Wellenleiter
- 210: Anschlußteil
- 214: Verschlußteil in 223
- 214a: innere Stirnseite von 224 im Bereich von 228
- 215: Stecker für 226
- 215a: Kontaktstift von 225
- 218: Konus
- 219: Signalleiter
- 220: Kopfteil von (232)
- 221: (kronenförmiger) Koppelteil
- 221b: Fortsatz von (221)
- 221c: Fortsatz von (221)
- 230: Sondenteil
- 231a: Schirmleiter
- 231b: Schirmleiter
- 232: Trägerkörper
- 240: Befestigungsteil
- 241: Außengewinde

- 319: Signalleiter
- 330: Sondenteil
- 331a: Schirmleiter
- 331b: Schirmleiter
- 332: Trägerkörper

- 400: Wellenleiter
- 410: Anschlußteil
- 412: äußeres Gehäuse
- 414: Verschlußteil in 413
- 414b: Gewindeverbindung
- 418: Doppelkonus
- 418a: Konushalterung
- 419a: Signalleiter
- 419b: Signalleiter
- 419c: Y-förmige Signalbrücke
- 430: Sondenteil
- 431a: Schirmleiter
- 431b: Schirmleiter
- 431c: Schirmleiterverlängerung
- 431d: Schirmleiterverlängerung
- 432: Trägerkörper
- 432a: separates Trägerkörperteil
- 440: Befestigungsteil

- 450: Kunststoff-Ummantelung
- 452: Schraubenfeder

- 519a: Signalleiter
- 519b: Signalleiter
- 530: Sondenteil
- 531a: Schirmleiter
- 531b: Schirmleiter
- 532: Trägerkörper

- 619a: Signalleiter
- 619b: Signalleiter
- 630: Sondenteil
- 631a: Schirmleiter
- 631b: Schirmleiter
- 632: Trägerkörper

## Patentansprüche

1. Wellenleiter für ein Füllstandsmeßgerät zur Bestimmung des Füllstands eines Mediums in einem Behälter mittels geführter Mikrowellen-Pulssignale, welcher Wellenleiter (100; 200; 400) teilweise in das zu messende Medium eintaucht und umfaßt:
- einen Sondenteil (130; 230; 330; 430; 530; 630) mit
-- wenigstens drei elektrisch leitenden Leitern (119, 131a, 131b; 219, 231a, 231b; 319, 331a, 331b; 419a, 419b, 431a, 431b; 519a, 519b, 531a, 531b; 619a, 619b, 631a, 631b),
--- wovon mindesten einer ein Signal- (119; 219; 319; 419a, 419b; 519a, 519b; 619a, 619b) und die anderen Schirmleiter (131a, 131b; 231a, 231b; 331a, 331b; 431a, 431b; 531a, 531b; 631a, 631b) sind,
-- mindestens einem Trägerkörper (132; 232; 332; 432; 532; 632),
--- der die Leiter (119, 131a, 131b; 219, 231a, 231b; 319, 331a, 331b; 419a, 419b, 431a, 431b; 519a, 519b, 531a, 531b; 619a, 619b, 631a, 631b) wenigstens teilweise umschließt,
- einen Anschlußteil (110; 210; 410)
-- mit einer Einkopplung (114, 118; 214, 218; 414, 418, 418a) zur Verbindung der Leiter (119, 131a, 131b; 219, 231a, 231b; 319, 331a, 331b; 419a, 419b, 431a, 431b; 519a, 519b, 531a, 531b; 619a, 619b, 631a, 631b) mit einer die Mikrowellensignale erzeugenden elektronischen Meßschaltung und
- ein Befestigungsteil (140; 240; 440) zur mechanischen Befestigung des Wellenleiters (100; 200; 400) am oder auf dem Behälter.

2. Wellenleiter nach Anspruch 1 mit einem Trägerkörper (132; 232; 332; 432; 532; 632) aus Kunststoff.

3. Wellenleiter nach einem der Ansprüche 1 oder 2, bei dem der Signalleiter (119; 219; 319; 419a, 419b; 519a, 519b; 619a, 619b) und/oder die Schirmleiter (131a, 131b; 231a, 231b; 331a, 331b; 431a, 431b; 531a, 531b; 631a, 631b) aus elektrisch leitendem Kunststoff bestehen.

4. Wellenleiter nach einem der Ansprüche 1 oder 2, bei dem der Signalleiter und/oder die Schirmleiter aus Metall bestehen.

5. Wellenleiter einem der Ansprüche 1 bis 4 mit einem Trägerkörper (132), der einen ovalen Querschnitt aufweist.

6. Wellenleiter einem der Ansprüche 1 bis 4 mit einem Trägerkörper (232; 332; 632), der einen mehrkantigen Querschnitt aufweist.

7. Wellenleiter nach einem der Ansprüche 1 bis 4 mit einem Trägerkörper (432), der einen sternförmigen Querschnitt aufweist.

8. Wellenleiter nach einem der Ansprüche 1 bis 4 mit einem Trägerkörper (532), der einen runden Querschnitt aufweist.

## Claims

1. A waveguide for a level meter for determining the level of a medium in a container by means of guided microwave pulse signals, which waveguide (100; 200; 400) is partly immersed in the medium to be measured and comprises:
- a probe part (130; 230; 330; 430; 530; 630) having
- - at least three electrically conductive conductors (119, 131a, 131b; 219, 231a, 231b; 319, 331a, 331b; 419a, 419b, 431a, 431b; 519a, 519b, 531a, 531b; 619a, 619b, 631a, 631b),
- - - of which at least one is a signal conductor (119; 219; 319; 419a, 419b; 519a, 519b; 619a, 619b) and the others are shield conductors (131a, 131b; 231a, 231b; 331a, 331b; 431a, 431b; 531a, 531b; 631a, 631b),
- - at least one supporting body (132; 232; 332; 432; 532; 632)
- - - which at least partly surrounds the conductors (119, 131a, 131b; 219, 231a, 231b; 319, 331a, 331b; 419a, 419b, 431a, 431b; 519a, 519b, 531a, 531b; 619a, 619b, 631a, 631b),
- a connecting part (110; 210; 410)
- - having a coupling (114, 118; 214, 218; 414, 418, 418a) for connecting the conductors (119, 131a, 131b; 219, 231a, 231b; 319, 331a, 331b; 419a, 419b, 431a, 431b; 519a, 519b, 531a, 531b; 619a, 619b, 631a, 631b) to an electronic measuring circuit generating the microwave signals, and
- a fixing part (140; 240; 440) for mechanically fixing the waveguide (100; 200; 400) to or on the container.

2. A waveguide according to claim 1, having a supporting body (132; 232; 332; 432; 532; 632) made of plastics.

3. A waveguide according to either one of claims 1 and 2, wherein the signal conductor (119; 219; 319; 419a, 419b; 519a, 519b; 619a, 619b) and/or the shield conductors (131a, 131b; 231a, 231b; 331a, 331b; 431a, 431b; 531a, 531b; 631a, 631b) are made of electrically conductive plastics.

4. A waveguide according to either one of claims 1 and 2, wherein the signal conductor and/or the shield conductors are made of metal.

5. A waveguide according to any one of claims 1 to 4, having a supporting body (132) with an oval cross-section.

6. A waveguide according to any one of claims 1 to 4, having a supporting body (232; 332; 632) with a polygonal cross-section.

7. A waveguide according to any one of claims 1 to 4, having a supporting body (432) with a star-shaped cross-section.

8. A waveguide according to any one of claims 1 to 4, having a supporting body (532) with a round cross-section.

## Revendications

1. Conducteur d'ondes pour un appareil de mesure du niveau de remplissage destiné à déterminer le niveau de remplissage d'un médium dans un récipient au moyen de signaux d'impulsion à micro-ondes guidés, lequel conducteur d'ondes (100 ; 200 ; 400) plonge partiellement dans le médium à mesurer et comprend :
- une partie de sonde (130 ; 230 ; 330 ; 430 ; 530 ; 630) avec
-- au moins trois conducteurs d'électricité (119, 131 a, 131 b, 219, 231 a, 231b, 319, 331a, 331b, 419a, 419b, 431a, 431b, 519a, 519b, 531a, 531b, 619a, 619b, 631a, 631b),
--- parmi lesquels, on a un signal (119 ; 219 ; 319 ; 419a, 419 b, 519a, 519b, 619a, 619b) et les autres sont des conducteurs de blindage (131a, 131b, 231a, 231b, 331a, 331b, 431a, 431b, 531a, 531b, 631a, 631b),
-- au moins un corps de support (132 ; 232 ; 332 ; 432 ; 532 ; 632),
--- qui entoure au moins partiellement les conducteurs (119 ; 131a, 131 b, 219, 231a, 231b, 319, 331a, 331b, 419a, 419b, 431a, 431b, 519a, 519b, 531a, 531b, 619a, 619b, 631a, 631b),
- une partie de raccordement (110 ; 210 ; 410)
-- avec une injection (114, 118 ; 214 ; 218 ; 414 ; 418 ; 418a) pour relier les conducteurs (119, 131a, 131b, 219, 231a, 231b, 319, 331a, 331b, 419a, 419b, 431a, 431b, 519a, 519b, 531a, 531b, 619a, 619b, 631a, 631b) avec un circuit de mesure électronique produisant des signaux micro-ondes et
- une partie de fixation (140 ; 240 ; 440) pour fixer de façon mécanique le conducteur d'ondes (100 ; 200 ; 400) au ou sur le récipient.

2. Conducteur d'ondes selon la revendication 1 avec un corps de support (132 ; 232 ; 432 ; 532 ; 632) en matière plastique.

3. Conducteur d'ondes selon une des revendications 1 ou 2, dans lequel le conducteur de signal (119 ; 219 ; 319 ; 419a ; 419 b ; 519 a, 519b ; 619a ; 619b) et/ou les conducteurs de blindage (131a, 131b, 231 a, 231b, 331 a, 331 b, 431 a, 431 b, 531a, 531 b, 631 a, 631 b) sont composés de matière plastique conductrice d'électricité.

4. Conducteur d'ondes selon une des revendications 1 ou 2, dans lequel le conducteur de signal et/ou les conducteurs de blindage sont en métal.

5. Conducteur d'ondes selon une des revendications 1 à 4 avec un corps de support (132) qui présente une section transversale ovale.

6. Conducteur d'ondes selon une des revendications 1 à 4 avec un corps de support (232 ; 332 ; 632) qui présente une section transversale à plusieurs bords.

7. Conducteur d'ondes selon une des revendications 1 à 4 avec un corps de support (432) qui présente une section transversale en forme d'étoile.

8. Conducteur d'ondes selon une des revendications 1 à 4 avec un corps de support (532) qui présente une section transversale ronde.
